# EUROPEAN PATENT APPLICATION

(11) **EP 4 509 444 A1**
(43) Date of publication of application: **19.02.2025**
(21) Application number: 22963248.4
(22) Date of filing: 18.11.2022
(51) Int. Cl.: B65G 65/00, B65G 67/02, B65G 47/91

(54) **EXTENSION-IN TYPE LOADING AND UNLOADING ROBOT AND LOADING AND UNLOADING CONTROL METHOD**

(30) Priority: 24.10.2022 CN 202211302281
(71) Applicant: Shanghai Sage Intelligent Technology Co., Ltd., Minhang District Shanghai 200240 (CN)
(72) Inventor: ZHANG, Jianzheng, Shanghai 200240 (CN); DONG, Yi, Shanghai 200240 (CN); LI, Lianghua, Shanghai 200240 (CN); LI, Hongtao, Shanghai 200240 (CN); LI, Fangbao, Shanghai 200240 (CN)
(74) Representative: Hofstetter, Schurack & Partner
(86) International application number: PCT/CN2022/132716
(87) International publication number: WO 2024/087269

(57) **Abstract**

The present application relates to the technical field of robots, and provides an extension-in type loading and unloading robot and a loading and unloading control method. The extension-in type loading and unloading robot comprises a rotating arm mechanism, a suction cup mechanism, a supporting trolley and a conveying belt; the conveying belt is mounted on the supporting trolley; the supporting trolley is used for adjusting a horizontal position and the height of the conveying belt; the rotating arm mechanism comprises a rotating arm component and a displacement adjusting component; the suction cup mechanism comprises a suction cup component and an angle adjusting component; the displacement adjusting component is used for adjusting a position of the suction cup component relative to the conveying belt; the rotating arm component is used for adjusting an angle of the suction cup component relative to the conveying belt; the angle adjusting component is used for adjusting an angle of the suction cup component relative to the rotating arm component; and the suction cup component is used for cooperating with the conveying belt to load and unload goods. By means of the rotating arm mechanism and the suction cup mechanism, a goods loading and unloading operation is performed at an area which the conveying belt cannot reach, thereby improving the adaptability to different loading and unloading scenarios.

## Description

### Technical Field

The present application relates to the technical field of robots, and particularly relates to an extension-in type loading and unloading robot, and a loading and unloading control method.

### Background Art

In the logistics industry, most goods are transferred and transported in the form of packing, involving the loading and unloading of containers. The loading and unloading of containers at present mainly depends on manual work. However, manual loading and unloading of containers has the disadvantages of high labor intensity and low efficiency.

In order to facilitate the loading and unloading of containers, the loading and unloading robot is an effective solution at present, especially an extension-in type robot. The extension-in type robot is equipped with a conveying belt system, which can be adjusted according to the loading scenario. For example, when the extension-in type robot is used in a van truck, the conveying belt system can extend into the interior of the cargo compartment and send the containers out by the conveying belt and the suction cup after reaching the stacking position of the containers. However, the extension-in type robot of the prior art has the following disadvantages. The suction cup may only assist in pushing or pulling the containers back and forth from the conveying belt without further manipulation. When a scenario is involved in which the conveying belt cannot be reached, for example, when the conveying belt can be lowered to a minimum height higher than the height of the discharge position, the suction cup on the loading and unloading robot in the prior art cannot achieve the delivery of the container. Even if the container can be forcibly delivered, the container may fall, which causes damage to the container. Therefore, the adaptability of current loading and unloading robots on the loading and unloading scenario is poor and needs to be improved.

Therefore, there is a need for a new extension-in type loading and unloading robot that can better adapt to different loading and unloading scenarios and complete the loading and unloading of containers.

### Summary of the Invention

In view of the above, embodiments of the present disclosure provide an extension-in type loading and unloading robot, and a loading and unloading control method, which can better adapt to different loading and unloading scenarios and complete loading and unloading of containers.

The embodiments of the present description provide the following technical solutions.

The present description provides, in an embodiment, an extension-in type loading and unloading robot including: a rotating arm mechanism, a suction cup mechanism, a supporting trolley and a conveying belt;
wherein the conveying belt is mounted on the supporting trolley for adjusting a horizontal position and a height of the conveying belt;
the rotating arm mechanism includes a rotating arm component and a displacement adjusting component;
the suction cup mechanism includes a suction cup component and an angle adjusting component;
the displacement adjusting component and the rotating arm component are successively connected to the conveying belt; the angle adjusting component is connected to the rotating arm component; the suction cup component is connected to the angle adjusting component;
the displacement adjusting component is configured for driving the rotating arm component to slide relative to the conveying belt so as to adjust the position of the suction cup component relative to the conveying belt; the sliding direction of the rotating arm component relative to the conveying belt is parallel to the conveying direction of the conveying belt;
the rotating arm component is configured for driving the angle adjusting component to rotate relative to the conveying belt so as to adjust the angle of the suction cup component relative to the conveying belt; the angle adjusting component is arranged horizontally with respect to a rotation axis direction of the conveying belt and is perpendicular to the conveying direction of the conveying belt;
the angle adjusting component is configured for driving the suction cup component to rotate relative to the rotating arm component so as to adjust the angle of the suction cup component relative to the rotating arm component; the rotation axis direction of the suction cup component relative to the rotating arm component is parallel to the rotation axis direction of the rotating arm component relative to the conveying belt; and
the suction cup component is configured for loading and unloading goods in cooperation with the conveying belt.

Preferably, the displacement adjusting component includes two sets of displacement adjustment assemblies respectively arranged on both sides of the conveying belt;
the displacement adjustment assembly includes a linear motor and a sliding table mounted on the linear motor; the sliding table is connected to the rotating arm component; and
the linear motor is configured for driving the sliding table to slide, so as to drive the rotating arm component to slide relative to the conveying belt.

Preferably, the rotating arm component includes two sets of rotary arm assemblies respectively arranged on both sides of the conveying belt;
the rotary arm assembly includes a rotary arm body and a first drive member, wherein the rotary arm body is rotatably connected to the conveying belt via the displacement adjusting component and the first drive member; and the first drive member is configured for driving the rotary arm body to rotate relative to the conveying belt so as to drive the angle adjusting component to rotate relative to the conveying belt.

Preferably, the angle adjusting component includes a suction cup holder and a second drive member;
the suction cup holder is rotatably connected to the rotating arm component, the rotation axis direction of the suction cup holder is horizontally arranged, and the rotation axis direction of the suction cup holder is also perpendicular to the conveying direction of the conveying belt; the suction cup component is mounted on the suction cup holder; and
the second drive member is mounted on the rotating arm component and is configured for driving the suction cup holder to rotate so as to adjust the angle of the suction cup component relative to the rotating arm component.

Preferably, the suction cup component includes a suction cup mounting frame, a third drive member and a plurality of suction cup bodies;
the suction cup mounting frame is rotatably connected to the suction cup holder; the rotation axis of the suction cup mounting frame is perpendicular to the rotation axis of the suction cup holder; the third drive member is configured for driving the suction cup mounting frame to rotate; and
the plurality of the suction cup bodies are respectively mounted on an end of the suction cup mounting frame facing away from the suction cup holder for sucking the containers.

Preferably, a lifting component is further provided between the suction cup holder and the rotating arm component;
the lifting component includes a fourth drive assembly and a lifting seat slidably connected to the rotating arm component; the suction cup holder is rotatably connected to the rotating arm component via the lifting seat; and
the fourth drive assembly is configured for driving the lifting seat to slide relative to the rotating arm component so as to adjust the height of the suction cup holder relative to the conveying belt.

Preferably, the supporting trolley includes a trolley body, a height adjustment component arranged on the trolley body, and a horizontal adjustment component;
the height adjustment component includes a telescopic strut and a mechanical arm; the telescopic strut is hinged with the conveying belt, and the extension and retraction of the telescopic strut drives the conveying belt to rise and fall;
the mechanical arm is hinged with the conveying belt, and the height of the conveying belt is adjusted in cooperation with the telescopic strut; and
the horizontal adjustment component includes a plurality of rollers arranged outside the trolley body; and the plurality of rollers are configured for moving the trolley body to adjust the horizontal position of the conveying belt.

Preferably, the mechanical arm is a two-degree-of-freedom mechanical arm;
a first arm of the two-degree-of-freedom mechanical arm is rotatably connected to the trolley body, and a rotation axis of the first arm is arranged vertically;
a second arm of the two-degree-of-freedom mechanical arm is rotatably connected to the first arm, and a rotation axis of the second arm is perpendicular to the rotation axis of the first arm;
the horizontal adjustment component further includes a strut base, wherein the strut base is fixedly connected to the first arm; the telescopic strut is mounted on the strut base; and
when the first arm rotates, the strut base follows the first arm to rotate the conveying belt relative to the trolley body.

Preferably, the invention further includes a sensor system and a control system;
the sensor system includes a vision sensor, an ultrasonic anti-collision sensor and a laser sensor;
the vision sensor is configured for detecting image information on an area to be loaded and unloaded and the conveying belt, and outputting the image information to the control system;
the ultrasonic anti-collision sensor is configured for detecting position information about the area to be loaded and unloaded relative to the conveying belt, and outputting the position information to the control system;
the laser sensor is configured for detecting distance information about the area to be loaded and unloaded relative to the conveying belt, and outputting the distance information to the control system; and
the control system receives image information, position information and the distance information, and controls the rotating arm mechanism, the suction cup mechanism, the supporting trolley and the conveying belt to cooperate with each other to perform loading and unloading processing on the container.

Embodiments of the present disclosure also provide a control method for an extension-in type loading and unloading robot, including a loading method and an unloading method.

The loading method includes the steps of:
S11, turning on a vision sensor, an ultrasonic anti-collision sensor and a laser sensor; detecting position information and distance information about the area to be loaded and unloaded relative to the conveying belt and image information about the area to be loaded and unloaded and the conveying belt; outputting the image information, the position information and the distance information to the control system;
S12, controlling by the control system a loading and unloading end of the conveying belt to penetrate into the area to be loaded and unloaded according to the image information, the distance information and the position information;
S13, acquiring by the control system size information about the containers on the conveying belt according to the image information;
S14, adjusting by the control system the penetration degree of the loading and unloading end of the conveying belt to the loading and unloading area according to the size information about the containers so as to reserve a container placement space;
S15, starting to move the conveying belt, and cooperating the rotating arm mechanism and the suction cup mechanism with each other to place the container on the conveying belt in the area to be loaded and unloaded; and
S16, driving the suction cup mechanism by the rotating arm mechanism to try and push the container;
the unloading method includes the steps of:
   S21, turning on a vision sensor, an ultrasonic anti-collision sensor and a laser sensor; detecting position information and distance information about the area to be loaded and unloaded relative to the conveying belt and image information about the area to be loaded and unloaded and the conveying belt; outputting the image information, the position information and the distance information to the control system;
   S22, controlling by the control system the loading and unloading end of the conveying belt to be close to the area to be loaded and unloaded according to the image information, the position information and the distance information;
   S23, adjusting by the control system the height of the loading and unloading end of the conveying belt according to the image information; and
   S24, cooperating the rotating arm mechanism and the suction cup mechanism with each other to suck and pull the container to the loading and unloading end of the conveying belt.

Compared with the prior art, the above-mentioned at least one technical solution adopted by the embodiments of the present description can achieve the advantageous effects that at least include the followings.
1. The degree of freedom for the suction cup mechanism to be adjustable is increased by providing a rotating arm mechanism,, so that more loading and unloading situations can be accommodated. For example, when the height of the conveying belt cannot be adjusted to be lower than the height of the area to be loaded and unloaded, the angle of the suction cup mechanism with respect to the conveying belt can be adjusted by rotating the arm mechanism, so that the suction cup mechanism rotates below the conveying belt to perform the loading and unloading operations on the area to be loaded and unloaded which is lower than the conveying belt; or when the height of the conveying belt cannot be adjusted to be higher than the height of the area to be loaded and unloaded, the angle of the suction cup structure with respect to the conveying belt can be adjusted by rotating the arm mechanism, so that the suction cup mechanism rotates above the conveying belt to perform loading and unloading operations on the area to be loaded and unloaded higher than the conveying belt. Its adaptability is stronger for different loading and unloading scenarios.
2. The displacement adjusting component in the rotating arm mechanism can also translate relative to the conveying belt by means of the rotating arm component and cooperate with the suction cup component to complete a simple and efficient drawing action and realize the fast loading and unloading of the container.

### Brief Description of the Drawings

In order to more clearly illustrate the technical solutions in the embodiments of the present application, the drawings to be used in the description of the embodiments will be briefly introduced below. Obviously, the drawings in the description below are only some embodiments of the present application. It will be apparent to those skilled in the art to obtain other drawings according to these drawings without involving any inventive effort.
Fig. 1 is a schematic view showing an overall structure of an extension-in type loading and unloading robot in the present embodiment;
Fig. 2 is a schematic view of a part of the structure of a supporting trolley in the present embodiment;
Fig. 3 is a schematic view of the structure of a conveying belt, a rotating arm mechanism and a suction cup mechanism in the present embodiment;
Fig. 4 is a schematic view showing a structure in which a suction cup body is moved above a loading and unloading end of the conveying belt by a rotary arm body in the present embodiment;
Fig. 5 is a schematic view showing a structure in which the suction cup body is moved to a position below the loading and unloading end of the conveying belt by the rotary arm body in the present embodiment;
Fig. 6 is a schematic flow chart of a control method for the extension-in type loading and unloading robot in the present embodiment;
Fig. 7 is a schematic flow chart for a loading method in the present embodiment;
Fig. 8 is a schematic flow chart of an unloading method in the present embodiment.

Reference Numerals: 1, rotating arm mechanism; 11, rotating arm component; 111, rotary arm body; 12, displacement adjusting component; 121, linear motor; 122, sliding table; 13, lifting component; 2, suction cup mechanism; 21, suction cup component; 211, suction cup mounting frame; 212, suction cup body; 22, angle adjusting component; 221, suction cup holder; 3, supporting trolley; 31, trolley body; 32, height adjustment component; 321, telescopic strut; 322, mechanical arm; 33, horizontal adjustment component; 331, strut base; 332, roller; 4, conveying belt; 5, bottom vision sensor.

### Detailed Description of the Invention

The embodiments of this application are described in detail in combination with the accompanying drawings below.

Other advantages and effects of the present disclosure will become readily apparent to those skilled in the art from the following detailed description by illustrating the embodiments of the present disclosure by way of specific examples below. Obviously, the described embodiments are only some, but not all, embodiments of the present application. The present application may be practiced or applied in various other specific embodiments. Various details in the description may be modified or varied from different perspectives and applications without departing from the spirit of the application. It should be noted that the embodiments and the features in the embodiments below may be combined with one another without conflict. Based on the examples in the disclosure, all other examples obtained by a person skilled in the art without involving any inventive effort are within the scope of protection of the disclosure.

It is intended that the following describe various aspects of embodiments within the scope of the appended claims. It should be apparent that aspects described herein may be embodied in a wide variety of forms and that any specific structure and/or function described herein is merely illustrative. Based on the present application, one skilled in the art will appreciate that one aspect described herein may be implemented independently of any other aspects, and that two or more of these aspects may be combined in various ways. For example, an apparatus may be implemented and/or a method practiced using any and of the numbers and aspects set forth herein. Additionally, such an apparatus may be implemented and/or such a method may be practiced using other structure and/or functionality in addition to one or more of the aspects set forth herein.

It should also be noted that the figures provided in the following embodiments merely illustrate the basic concepts of the present application in a schematic way, that the figures only show the components related to the present application rather than the number, shape and size of the components in actual implementation, that the type, number and proportion of the components in actual implementation may be changed at will, and that the layout of the components may be more complex.

In addition, in the following description, specific details are provided to facilitate a thorough understanding of the examples. However, it will be understood by those skilled in the art that the aspects may be practiced without these specific details.

The inventors have found that the present loading and unloading robot has a poor adaptability in loading and unloading scenarios, and may only handle the goods in the loading and unloading scenario where the conveying belt can reach, while it is difficult to handle the goods in the loading and unloading scenario where the conveying belt cannot reach in height or position.

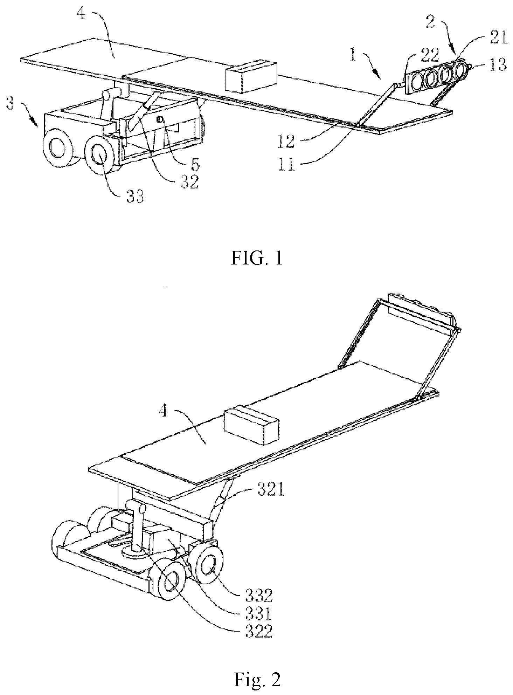

Based on this, the embodiment of the present description proposes an extension-in type loading and unloading robot. As shown in Fig. 1, the present application including a rotating arm mechanism 1, a suction cup mechanism 2, a supporting trolley 3 and a conveying belt 4. By means of the cooperation between the rotating arm mechanism 1 and the suction cup mechanism 2, the degree of freedom of the suction cup mechanism 2 is increased, and the suction cup mechanism 2 may complete the loading and unloading of the containers in more loading and unloading scenarios, improving the adaptability to the loading and unloading scenes.

The technical solutions provided by various embodiments of the present application are described below with reference to the accompanying drawings.

Referring to Fig. 1, an embodiment of the present specification provides an extension-in type loading and unloading robot including a rotating arm mechanism 1, a suction cup mechanism 2, a supporting trolley 3, a conveying belt 4, a sensor system and a control system.

Referring to Figs. 1 and 2, the supporting trolley 3 includes a trolley body 31, a height adjustment component 32, and a horizontal adjustment component 33.

The height adjustment component 32 includes a telescopic strut 321 and a mechanical arm 322.

The mechanical arm 322 is embodied as a two degree of freedom mechanical arm. The first arm of the two-degree-of-freedom mechanical arm is rotatably connected to the base of the trolley body 31, and the rotation axis of the first arm is arranged in the vertical direction. The second arm of the two-degree-of-freedom mechanical arm is rotatably connected to the first arm, and the rotation axis direction of the second arm is perpendicular to the rotation axis direction of the first arm. The end of the second arm away from the first arm is hinged to the lower end of the conveying belt 4. Specifically, the second arm may be hinged to the lower end of the conveying belt 4 by means of a movable ball joint.

The telescopic strut 321 may be of a hydraulic type, an electric type or a pneumatic type, as long as the lifting of the conveying belt 4 may be achieved, and it is not limited thereto. The telescopic struts 321 may be two, one or another number depending on the desired load capacity of the conveying belt 4.

The horizontal adjustment component 33 includes a strut base 331 and a plurality of rollers 332.

The bottom of the strut base 331 is provided with a sliding groove. The bottom of the trolley body 31 is provided with a semi-circular guide rail. The strut base 331 is slidably connected to the semi-circular guide rail via the sliding groove. The strut base 331 is fixedly connected to the first arm and rotates relative to the trolley body 31 following the rotation of the first arm. One end of the telescopic strut 321 is fixedly connected to the strut base 331, and the other end of the telescopic strut 321 is hinged to the lower end of the conveying belt 4 via a movable ball joint. Further, when the first arm rotates, the second arm and the telescopic strut 321 rotate the conveying belt 4 in the horizontal direction with respect to the trolley body 31 to adjust the position in the horizontal direction. When the telescopic strut 321 adjusts the height of the conveying belt 4, the mechanical arms 322 may cooperate to adjust the height, and the mechanical arm 322 may also individually adjust the height of the conveying belt 4.

The plurality of rollers 332 are evenly divided into four groups, and are respectively rotatably connected to four corners of the trolley body 31 to drive the trolley body 31 to move in the horizontal direction so as to adjust the position of the conveying belt 4 in the horizontal direction.

The rotating arm mechanism 1 includes a rotating arm component 11, a displacement adjusting component 12, and a lifting component 13.

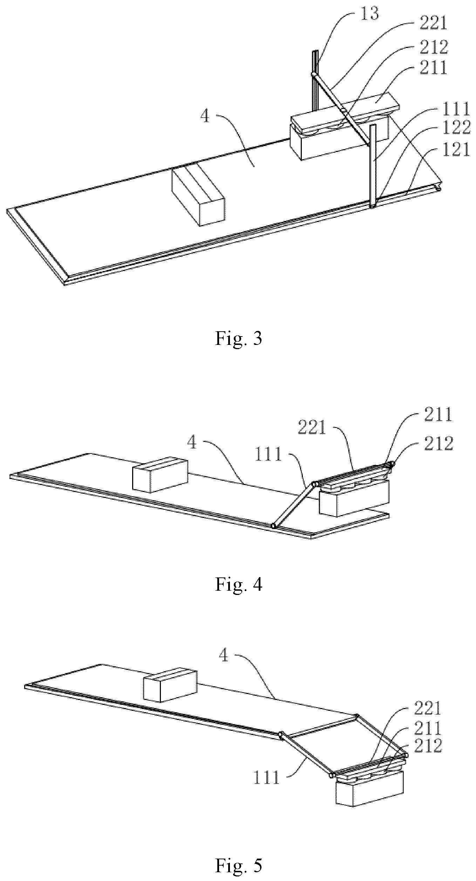

The displacement adjusting component 12 includes two sets of displacement adjustment assemblies respectively arranged on both sides of the conveying belt 4. Referring to Figs. 1 and 3, the displacement adjustment assembly includes a linear motor 121 mounted on a side of the conveying belt 4 and a sliding table 122 mounted on the linear motor 121. The linear motor 121 is used to drive the sliding table 122 to slide in a direction parallel to the conveying direction of the conveying belt 4. Both ends of the linear motor 121 are respectively provided with a first limiting block and a second limiting block to limit the sliding stroke of the sliding table 122. The first limiting block is arranged close to the loading and unloading end of the conveying belt 4. The loading and unloading end of the conveying belt 4 specifically refers to one end of the conveying belt 4 penetrating into the area to be loaded and unloaded.

The rotating arm component 11 includes two sets of rotary arm assemblies arranged on both sides of the conveying belt 4. The two sets of rotary arm assemblies are arranged in one-to-one correspondence with the two sets of displacement adjustment assemblies.

The rotary arm assembly includes a rotary arm body 111 and a first drive member. The first drive member is a servo motor. The first drive member is mounted on a sliding table 122 in the corresponding displacement adjustment assembly. The rotary arm body 111 is fixedly connected to an output shaft of the first drive member. The output shaft of the first drive member rotates to rotate the rotary arm body 111 relative to the conveying belt 4. The rotation axis of the rotary arm body 111 is arranged horizontally. The rotation axis direction of the rotary arm body 111 is perpendicular to the conveying direction of the conveying belt 4.

Alternatively, the first drive member may be a stepper motor, or the first drive member may be a combination of servo motor and speed reducer to increase the load capacity of the rotary arm by increasing the torque.

The lifting components 13 are provided in two groups, and the two groups of lifting components 13 are respectively provided on the two rotary arm bodies 111.

The lifting component 13 includes a fourth drive assembly and a lifting seat. The fourth drive assembly is a linear module. The fourth drive assembly is mounted on a corresponding rotary arm body 111. The lifting seat is fixed on a sliding seat of the fourth drive assembly, and under the drive of the fourth drive assembly, slides relative to the rotary arm body 111. The sliding direction of the lifting seat is parallel to the length direction of the rotary arm body 111. Two lifting seats are respectively located at opposite ends of the two rotary arm bodies 111.

Alternatively, the fourth drive assembly may be a synchronous belt structure or a synchronous chain structure as long as the lifting seat may be caused to slide relative to the rotary arm body 111.

The suction cup mechanism 2 includes a suction cup component 21 and an angle adjusting component 22.

The angle adjusting component 22 includes a suction cup holder 221 and a second drive member.

With reference to Figs. 3-5, the second drive member is a servo motor. The second drive member is provided with two in total. The two second drive members are respectively mounted on opposite ends of the two lifting bases. The output shafts of the two second drive members are oppositely arranged, and the axes of the output shafts of the two second drive members coincide. Both ends of the suction cup holder 221 are fixedly connected to the output shafts of the two second drive members, respectively, and rotate relative to the two rotary arm bodies 111 under the driving of the two drive members. The axis of rotation of the suction cup holder 221 is arranged horizontally. The rotation axis direction of the suction cup holder 221 is perpendicular to the conveying direction of the conveying belt 4.

Alternatively, the second drive member may be a stepper motor, and the second drive member may be provided as one. The suction cup holder 221 is rotated relative to the two rotary arm bodies 111 by a single second drive member. Alternatively, the second drive member may be a combination of a servo motor and a speed reducer to increase the torque of the suction cup holder 221.

The suction cup component 21 includes a suction cup mounting frame 211, a third drive member, and a plurality of suction cup bodies 212.

The suction cup mounting frame 211 is rotatably connected to the suction cup holder 221. The rotation axis direction of the suction cup mounting frame 211 is perpendicular to the rotation axis direction of the suction cup holder 221. The third drive member is a servo motor, and the third drive member is configured for driving the suction cup mounting frame 211 to rotate. A plurality of suction cup bodies 212 are fixed to one end of the suction cup mounting frame 211 facing away from the suction cup holder 221, and the plurality of suction cup bodies 212 are sequentially arranged along the length direction of the suction cup mounting frame 211. In actual use, the suction cup body 212 is used to attract a container.

Alternatively, the third drive member may be a stepper motor.

In other embodiments, the displacement adjusting component 12 may also be a combination of a displacement adjustment assembly and a glide assembly. The glide assembly includes a linear guide rail and a sliding table 122 slidably connected to the linear guide. Furthermore, only one set of displacement adjustment assemblies is required to cooperate with the glide assembly, namely, two sets of rotary arm assemblies may be driven to move. The displacement adjusting component 12 may also be a combination of other types of motion mechanisms, such as synchronous belts, chains, etc.

Referring to Figs. 1, 4, and 5, the cooperative relationship among the rotating arm component 11, the displacement adjusting component 12, the lifting component 13, the suction cup component 21, and the angle adjusting component 22 is as follows. The two sets of displacement adjustment assemblies in the displacement adjusting component 12 are respectively configured for driving the two sets of rotary arm assemblies to slide relative to the conveying belt 4 in the conveying direction so as to adjust the relative position of the suction cup body 212 relative to the conveying belt 4 in the conveying direction. When the suction cup body 212 is sucked to the container, the container may be conveyed above the conveying belt 4 via the displacement adjustment assemblies.

The two sets of rotary arm assemblies drive the suction cup holder 221 to rotate relative to the conveying belt 4 by rotating relative to the conveying belt 4, thereby adjusting the angle of the suction cup body 212 relative to the conveying belt 4. In addition, the suction cup body 212 may be moved above the conveying belt 4 or below the conveying belt 4 by the rotation of the rotary arm body 111, so as to suck the container above or below the loading and unloading end of the conveying belt 4.

The two sets of lifting components 13 are configured for adjusting the relative position between the suction cup holder 221 and the two rotary arm bodies 111, and further adjusting the position of the suction cup body 212 relative to the rotary arm body 111, so as to realize the height adjustment of the suction cup body 212 for the lifting of the container.

The suction cup holder 221 is rotated relative to the two rotary arm bodies 111 by the adjustment of the second drive member, so as to adjust the angle of the suction cup body 212 relative to the two rotary arms, which is mainly configured for adjusting the suction position between the suction cup body 212 and the different container surfaces.

The relative rotation between the suction cup mounting frame 211 and the suction cup holder 221 is realized via the third drive member. The suction cup mounting frame 211 may be rotated to drive the container sucked by the suction cup body 212 to rotate and adjust the angle of the container relative to the conveying belt 4, so as to solve the problem that the conveying belt 4 cannot transport the container due to the length of the container exceeding the width of the conveying belt 4.

The sensor system includes a vision sensor, an ultrasonic anti-collision sensor and a laser sensor.

Referring to Figs. 1 and 2, there are a plurality of vision sensors, which are respectively arranged on the strut base 331 and the upper portion of the conveying belt 4. The vision sensor arranged on the strut base 331 is a bottom vision sensor 5 for detecting the spatial image information below the loading and unloading end of the conveying belt 4 and outputting the image information to the control system. The vision sensor on the upper portion of the conveying belt 4 is configured for detecting image information about the space above the conveying belt 4, collecting the presence/absence of a container on the conveying belt 4, the size of the container, the stacking condition of the container and the condition of the space reserved above the loading and unloading end of the conveying belt 4, and outputting the image information to the control system. The number of the specific vision sensors is determined according to the actual situation and is not limited in the present embodiment. Specially, the control system is a controller.

There are a plurality of ultrasonic anti-collision sensors, which are respectively arranged on the trolley body 31 and the conveying belt 4. The ultrasonic anti-collision sensor arranged on the trolley body 31 is configured for detecting the position information of the surrounding environment in the loading and unloading area with respect to the trolley body 31, and outputting the position information to the control system so as to adjust the position of the trolley body 31 in time and avoid collision. The ultrasonic anti-collision sensor arranged on the conveying belt 4 is configured for detecting the position information of the surrounding environment of the loading and unloading area relative to the conveying belt 4, and outputting the position information to the control system so as to adjust the position of the conveying belt 4 in time and avoid collision. The number of specific ultrasonic anti-collision sensors is determined according to the actual situation and is not limited in the present embodiment.

A plurality of laser sensors are arranged on the trolley body 31 and the conveying belt 4, respectively. The laser sensors arranged on the trolley body 31 are configured for detecting distance information of the loading and unloading area with respect to the trolley body 31 and output the distance information to the control system so that the control system adjusts the distance between the trolley body 31 and the loading and unloading area. The laser sensor arranged on the conveying belt 4 is configured for detecting the distance information of the area to be loaded and unloaded with respect to the conveying belt 4, and outputting the distance information to the control system, so that the control system adjusts the distance between the conveying belt 4 and the area to be loaded and unloaded.

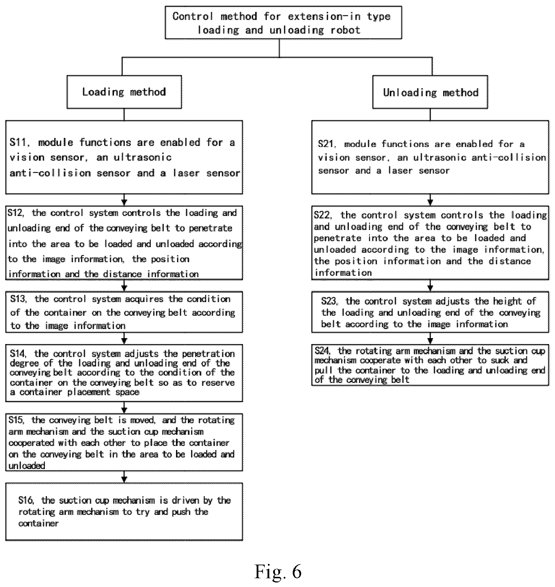

Referring to Fig. 6, embodiments of the present disclosure also provide a control method for an extension-in type loading and unloading robot, including a loading method and an unloading method.

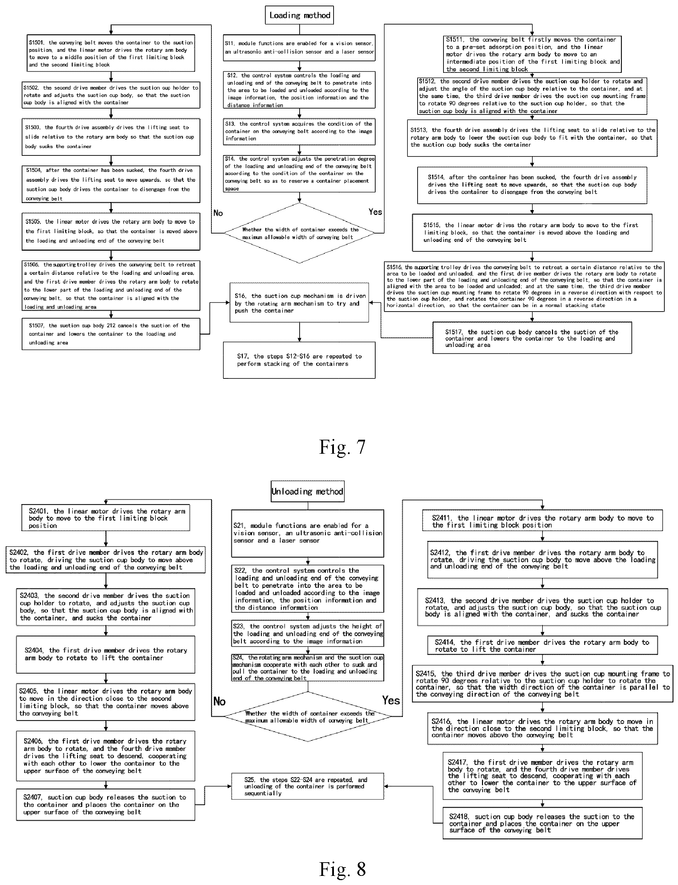

Referring to Figs. 6 and 7, the loading method steps includes the steps below.

S11, a vision sensor, an ultrasonic anti-collision sensor and a laser sensor are turned on for detecting position information and distance information about the area to be loaded and unloaded relative to the conveying belt 4 and image information about the area to be loaded and unloaded and the conveying belt 4, and outputting the image information, the position information and the distance information to the control system.

This step is mainly used for detecting the positional relationship and distance relationship of the conveying belt 4 with respect to the area to be loaded and unloaded and the goods condition on the conveying belt 4, and to feedback the information collection to the control system for subsequent operation. In this process, the vision sensor, the ultrasonic anti-collision sensor and the laser sensor on the trolley body 31 also timely feed back the position information, distance information and image information about the trolley body 31 relative to the area to be loaded and unloaded to the control system, so as to timely adjust the position of the supporting trolley 3 relative to the area to be loaded and unloaded.

S 12, the control system controls a loading and unloading end of the conveying belt 4 to penetrate into the area to be loaded and unloaded according to the image information, the distance information and the position information.

By detecting the position information and the distance information between the conveying belt 4 and the area to be loaded and unloaded, the control system gives a corresponding instruction to control the movement of the supporting trolley 3 to drive the conveying belt 4 into the area to be loaded and unloaded.

S13, the control system acquires size information about the containers on the conveying belt 4 according to the image information.

After the conveying belt 4 enters the vicinity of the area to be loaded and unloaded, the container size information is obtained according to the detection of the vision sensor to judge the condition of the container on the conveying belt 4.

S14, the control system adjusts the penetration degree of the loading and unloading end of the conveying belt 4 to the loading and unloading area according to the size information about the containers so as to reserve a container placement space.

According to the size and number of containers, the degree of penetration of the loading and unloading end of the conveying belt 4 into the loading and unloading area is adjusted by the supporting trolley 3, and a space for stacking containers is reserved on the loading and unloading area.

S 1401, the control system calculates the lifting angle or the lowering angle of the second arm and the lifting height or the lowering height of the telescopic strut 321 according to the position information and the distance information between the conveying belt 4 and the area to be loaded and unloaded, and adjusts the height of the conveying belt 4 relative to the area to be loaded and unloaded.

The main purpose of this process is to reserve the space for loading and the space for moving the rotary arm body 111, so as to facilitate rapid loading.

S1402, the control system adjusts the angle and distance of the rotary arm body 111 and the suction cup body 212 with respect to the conveying belt 4 according to the position information and the distance information between the conveying belt 4 and the area to be loaded and unloaded.

This process is to complete the initialization of the rotary arm body 111 and the suction cup body 212 to facilitate subsequent loading operations.

S15, starting to move the conveying belt 4, and cooperating the rotating arm mechanism 1 and the suction cup mechanism 2 with each other to place the container on the conveying belt 4 in the area to be loaded and unloaded.

The rotating arm mechanism 1 and the suction cup mechanism 2 cooperate with each other to load a container with a width complying with the requirements of the conveying belt 4 as follows.

S1501, the conveying belt 4 firstly moves the container to a pre-set adsorption position, and the linear motor 121 drives the rotary arm body 111 to move to an intermediate position between the first limiting block and the second limiting block.

S1502, the second drive member drives the suction cup holder 221 to rotate and adjusts the suction cup body 212, so that the suction cup body 212 is aligned with the container.

S1503, the fourth drive assembly drives the lifting seat to slide relative to the rotary arm body 111 to lower the suction cup body 212 to fit with the container, so that the suction cup body 212 sucks the container.

S1504, after the container has been sucked, the fourth drive assembly drives the lifting seat to move upwards, so that the suction cup body 212 drives the container to disengage from the conveying belt 4.

S1505, the linear motor 121 drives the rotary arm body 111 to move to the first limiting block, so that the container is moved above the loading and unloading end of the conveying belt 4.

S1506, the supporting trolley 3 drives the conveying belt 4 to retreat a certain distance relative to the area to be loaded and unloaded, and the first drive member drives the rotary arm body 111 to rotate to the lower part of the loading and unloading end of the conveying belt 4, so that the container is aligned with the area to be loaded and unloaded.

S1507, the suction cup body 212 cancels the suction of the container and lowers the container to the area to be loaded and unloaded.

The rotating arm mechanism 1 and the suction cup mechanism 2 cooperate with each other to load a container with a width exceeding the maximum width allowed by the conveying belt 4 as follows.

S1511, the conveying belt 4 firstly moves the container to a pre-set adsorption position, and the linear motor 121 drives the rotary arm body 111 to move to an intermediate position between the first limiting block and the second limiting block.

S1512, the second drive member drives the suction cup holder 221 to rotate and adjust the angle of the suction cup body 212 relative to the container, and at the same time, the third drive member drives the suction cup mounting frame 211 to rotate 90 degrees relative to the suction cup holder 221, so that the suction cup body 212 is aligned with the container.

S1513, the fourth drive assembly drives the lifting seat to slide relative to the rotary arm body 111 to lower the suction cup body 212 to fit with the container, so that the suction cup body 212 sucks the container.

S1514, after the container has been absorbed, the fourth drive assembly drives the lifting seat to move upwards, so that the suction cup body 212 drives the container to disengage from the conveying belt 4.

S 1515, the linear motor 121 drives the rotary arm body 111 to move to the first limiting block, so that the container is moved above the loading and unloading end of the conveying belt 4.

S1516, the supporting trolley 3 drives the conveying belt 4 to retreat a certain distance relative to the area to be loaded and unloaded, and the first drive member drives the rotary arm body 111 to rotate to the lower part of the loading and unloading end of the conveying belt 4, so that the container is aligned with the area to be loaded and unloaded; and at the same time, the third drive member drives the suction cup mounting frame 211 to rotate 90 degrees in a reverse direction relative to the suction cup holder 221, and the container rotates 90 degrees in a reverse direction in a horizontal direction, so that the container may be in a normal stacking state.

S1517, the suction cup body 212 cancels the suction of the container and lowers the container to the area to be loaded and unloaded.

For containers having a width exceeding the maximum width allowed by the conveying belt 4, the width direction of the containers will be parallel to the conveying direction of the conveying belt 4 during transport on the conveying belt 4 to facilitate transport of the containers. By rotating the suction cup mounting frame 211, the stacking angle of the containers during stacking is adjusted to ensure that the containers may be subsequently stacked in a normal stacking state. In other embodiments, with regard to a small-sized container, the linear motor 121 may also directly drive the rotary arm body 111 to slide, so that the suction cup body 212 directly sucks the container to transport the small-sized container to an area to be loaded and unloaded in a pushing or pulling manner in cooperation with the transportation of the conveying belt 4.

S16, the rotating arm mechanism 1 drives the suction cup mechanism 2 to try and push the container.

This is to ensure a smooth placement of the containers to facilitate the subsequent stacking operation of the containers.

S 17, the steps S12-S16 are repeated to perform stacking of the containers. Referring to Figs. 6 and 8, the unloading method steps are as follows.

S21, the vision sensor, the ultrasonic anti-collision sensor and the laser sensor are turned on; position information and distance information about the area to be loaded and unloaded with respect to the conveying belt 4 and image information about the area to be loaded and unloaded and the conveyor second belt are detected; and the image information, the position information and the distance information are output to the control system.

S22, the control system controls the loading and unloading end of the conveying belt 4 to approach the area to be loaded and unloaded according to the image information, the position information and the distance information.

S23, the control system adjusts the height of the loading and unloading end of the conveying belt 4 according to the image information.

Among other things, the height of the loading and unloading end of the conveying belt 4 needs to be adjusted to a height below the bottom of the container for subsequent unloading. In a special case, if the height of the loading and unloading end of the conveying belt 4 cannot be adjusted to a height lower than the bottom of the container, it is necessary to discharge the goods by the cooperation of the rotating arm mechanism 1 and the suction cup mechanism 2.

S24, the rotating arm mechanism 1 and the suction cup mechanism 2 cooperate with each other to suck and pull the container to the loading and unloading end of the conveying belt 4.

The process of unloading by the rotating arm mechanism 1 and the suction cup mechanism 2 cooperating with each other is as follows.

S2401, the linear motor 121 drives the rotary arm body 111 to move to the first limiting block position.

S2402, the first drive member drives the rotary arm body 111 to rotate, driving the suction cup body 212 to move above the loading and unloading end of the conveying belt 4.

S2403, the second drive member drives the suction cup holder 221 to rotate, and adjusts the suction cup body 212, so that the suction cup body 212 is aligned with the container, and sucks the container.

S2404, the first drive member drives the rotary arm body 111 to rotate to lift the container.

S2405, the linear motor 121 drives the rotary arm body 111 to move in the direction close to the second limiting block, so that the container moves above the conveying belt 4.

S2406, the first drive member drives the rotary arm body 111 to rotate, and the fourth drive member drives the lifting seat to descend, cooperating with each other to lower the container to the upper surface of the conveying belt 4.

S2407, the suction cup body 212 releases the suction of the container and places the container on the upper surface of the conveying belt 4.

The rotating arm mechanism 1 and the suction cup mechanism 2 cooperate with each other to unload a container with a width exceeding the maximum width allowed by the conveying belt 4 as follows.

S2411, the linear motor 121 drives the rotary arm body 111 to move to the first limiting block position.

S2412, the first drive member drives the rotary arm body 111 to rotate, driving the suction cup body 212 to move above the loading and unloading end of the conveying belt 4.

S2413, the second drive member drives the suction cup holder 221 to rotate, and adjusts the suction cup body 212, so that the suction cup body 212 is aligned with the container, and sucks the container.

S2414, the first drive member drives the rotary arm body 111 to rotate to lift the container.

S2415, the third drive member drives the suction cup mounting frame 211 to rotate 90 degrees relative to the suction cup holder 221 to rotate the container, so that the width direction of the container is parallel to the conveying direction of the conveying belt 4.

S2416, the linear motor 121 drives the rotary arm body 111 to move in the direction close to the second limiting block, so that the container moves above the conveying belt 4.

S2417, the first drive member drives the rotary arm body 111 to rotate, and the fourth drive member drives the lifting seat to descend, cooperating with each other to lower the container to the upper surface of the conveying belt 4.

S2418, the suction cup body 212 releases the suction of the container and places the container on the upper surface of the conveying belt 4.

The rotating arm mechanism 1 and the suction cup mechanism 2 cooperate with each other. When the height of the loading and unloading end of the conveying belt 4 cannot be lowered to be lower than the height of the bottom, the process of the unloading is as follows.

S2421, the linear motor 121 drives the rotary arm body 111 to move to the first limiting block position.

S2422, the first drive member drives the rotary arm body 111 to rotate, driving the suction cup body 212 to move below the loading and unloading end of the conveying belt 4.

S2423, the second drive member drives the suction cup holder 221 to rotate, and adjusts the suction cup body 212, so that the suction cup body 212 is aligned with the container, and sucks the container.

S2424, the first drive member drives the rotary arm body 111 to rotate to lift the container.

S2425, the linear motor 121 drives the rotary arm body 111 to move in the direction close to the second limiting block, so that the container moves above the conveying belt 4.

S2426, the first drive member drives the rotary arm body 111 to rotate, and the fourth drive member drives the lifting seat to descend, cooperating with each other to lower the container to the upper surface of the conveying belt 4.

S2407, the suction cup body 212 releases the suction of the container and places the container on the upper surface of the conveying belt 4.

In S25, the steps S22-S24 are repeated, and unloading of the container is performed sequentially.

Each embodiment of the present disclosure is described in a progressive manner with reference to the same or similar parts throughout the various embodiments, and each embodiment is intended to cover variations from the other embodiments. In particular, for the embodiment of the product to be described later, since it corresponds to the method, the description is relatively simple, and it is sufficient to refer to part of the description of the embodiment of the system.

The applicant states that the description above is only a specific embodiment of the present application, but the scope of protection of the present application is not limited thereto. Any changes and substitutions which can be easily made by those skilled in the art within the technical scope of the present application disclosed are included in the scope of protection the present application. Therefore, the scope of protection of the present application shall be subject to the scope of protection of the claims.

## Claims

1. An extension-in type loading and unloading robot, **characterized by** comprising a rotating arm mechanism (1), a suction cup mechanism (2), a supporting trolley (3) and a conveying belt (4);
wherein the conveying belt (4) is mounted on the supporting trolley (3) for adjusting a horizontal position and a height of the conveying belt (4);
the rotating arm mechanism (1) comprises a rotating arm component (11) and a displacement adjusting component (12);
the suction cup mechanism (2) comprises a suction cup component (21) and an angle adjusting component (22);
the displacement adjusting component (12) and the rotating arm component (11) are successively connected to the conveying belt (4); the angle adjusting component (22) is connected to the rotating arm component (11); the suction cup component (21) is connected to the angle adjusting component (22);
the displacement adjusting component (12) is configured for driving the rotating arm component (11) to slide relative to the conveying belt (4) so as to adjust the position of the suction cup component (21) relative to the conveying belt (4); the sliding direction of the rotating arm component (11) relative to the conveying belt (4) is parallel to the conveying direction of the conveying belt (4);
the rotating arm component (11) is configured for driving the angle adjusting component (22) to rotate relative to the conveying belt (4) so as to adjust the angle of the suction cup component (21) relative to the conveying belt (4); the angle adjusting component (22) is arranged horizontally with respect to a rotation axis direction of the conveying belt (4) and is perpendicular to the conveying direction of the conveying belt (4);
the angle adjusting component (22) is configured for driving the suction cup component (21) to rotate relative to the rotating arm component (11) so as to adjust the angle of the suction cup component (21) relative to the rotating arm component (11); the rotation axis direction of the suction cup component (21) relative to the rotating arm component (11) is parallel to the rotation axis direction of the rotating arm component (11) relative to the conveying belt (4); and
the suction cup component (21) is configured for loading and unloading goods in cooperation with the conveying belt (4).

2. The extension-in type loading and unloading robot according to claim 1, **characterized in that** the displacement adjusting component (12) comprises two sets of displacement adjustment assemblies respectively arranged on both sides of the conveying belt (4);
the displacement adjustment assembly comprises a linear motor (121) and a sliding table (122) mounted on the linear motor (121); the sliding table (122) is connected to the rotating arm component (11); and
the linear motor (121) is configured for driving the sliding table (122) to slide, so as to drive the rotating arm component (11) to slide relative to the conveying belt (4).

3. The extension-in type loading and unloading robot according to claim 1, **characterized in that** the rotating arm component (11) comprises two sets of rotary arm assemblies respectively arranged on both sides of the conveying belt (4);
the rotary arm assembly comprises a rotary arm body (111) and a first drive member, wherein the rotary arm body (111) is rotatably connected to the conveying belt (4) via the displacement adjusting component (12) and the first drive member; and the first drive member is configured for driving the rotary arm body (111) to rotate relative to the conveying belt (4) so as to drive the angle adjusting component (22) to rotate relative to the conveying belt (4).

4. The extension-in type loading and unloading robot according to claim 1, **characterized in that** the angle adjusting component (22) comprises a suction cup holder (221) and a second drive member;
the suction cup holder (221) is rotatably connected to the rotating arm component (11), the rotation axis direction of the suction cup holder (221) is horizontally arranged, and the rotation axis direction of the suction cup holder (221) is also perpendicular to the conveying direction of the conveying belt (4); the suction cup component (21) is mounted on the suction cup holder (221); and
the second drive member is mounted on the rotating arm component (11) and is configured for driving the suction cup holder (221) to rotate so as to adjust the angle of the suction cup component (21) relative to the rotating arm component (11).

5. The extension-in type loading and unloading robot according to claim 4, **characterized in that** the suction cup component (21) comprises a suction cup mounting frame (211), a third drive member and a plurality of suction cup bodies (212);
the suction cup mounting frame (211) is rotatably connected to the suction cup holder (221); the rotation axis of the suction cup mounting frame (211) is perpendicular to the rotation axis of the suction cup holder (221); the third drive member is configured for driving the suction cup mounting frame (211) to rotate; and
the plurality of the suction cup bodies (212) are respectively mounted on an end of the suction cup mounting frame (211) facing away from the suction cup holder (221) for sucking the containers.

6. The extension-in type loading and unloading robot according to claim 4, **characterized in that** a lifting component (13) is further provided between the suction cup holder (221) and the rotating arm component (11);
the lifting component (13) comprises a fourth drive assembly and a lifting seat slidably connected to the rotating arm component (11); the suction cup holder (221) is rotatably connected to the rotating arm component (11) via the lifting seat; and
the fourth drive assembly is configured for driving the lifting seat to slide relative to the rotating arm component (11) so as to adjust the height of the suction cup holder (221) relative to the conveying belt (4).

7. The extension-in type loading and unloading robot according to claim 1, **characterized in that** the supporting trolley (3) comprises a trolley body (31), a height adjustment component (32) arranged on the trolley body (31), and a horizontal adjustment component (33);
the height adjustment component (32) comprises a telescopic strut (321) and a mechanical arm (322);
the telescopic strut (321) is hinged with the conveying belt (4), and the extension and retraction of the telescopic strut (321) drives the conveying belt (4) to rise and fall;
the mechanical arm (322) is hinged with the conveying belt (4), and the height of the conveying belt (4) is adjusted in cooperation with the telescopic strut (321);
the horizontal adjustment component (33) comprises a plurality of rollers (332) arranged outside the trolley body (31); and the plurality of rollers (332) are configured for moving the trolley body (31) to adjust the horizontal position of the conveying belt (4).

8. The extension-in type loading and unloading robot according to claim 7, **characterized in that** the mechanical arm (322) is a two-degree-of-freedom mechanical arm (322);
a first arm of the two-degree-of freedom mechanical arm (322) is rotatably connected to the trolley body (31), and a rotation axis of the first arm is arranged vertically;
a second arm of the two-degree-of freedom mechanical arm (322) is rotatably connected to the first arm, and a rotation axis of the second arm is perpendicular to the rotation axis of the first arm;
the horizontal adjustment component (33) further comprises a strut base (331), wherein the strut base (331) is fixedly connected to the first arm; the telescopic strut (321) is mounted on the strut base (331); and
when the first arm rotates, the strut base (331) follows the first arm to rotate the conveying belt (4) relative to the trolley body (31).

9. The extension-in type loading and unloading robot according to any of claims 1-8, characterized further comprising a sensor system and a control system;
wherein the sensor system comprises a vision sensor, an ultrasonic anti-collision sensor and a laser sensor;
the vision sensor is configured for detecting image information on an area to be loaded and unloaded and the conveying belt (4), and outputting the image information to the control system;
the ultrasonic anti-collision sensor is configured for detecting position information about the area to be loaded and unloaded relative to the conveying belt (4), and outputting the position information to the control system;
the laser sensor is configured for detecting distance information about the area to be loaded and unloaded relative to the conveying belt (4), and outputting the distance information to the control system; and
the control system receives image information, position information and the distance information, and controls the rotating arm mechanism (1), the suction cup mechanism (2), the supporting trolley (3) and the conveying belt (4) to cooperate with each other to perform loading and unloading processing on the container.

10. A control method for an extension-in type loading and unloading robot, **characterized by** comprising a loading method and an unloading method;
wherein the loading method comprises the steps of:
S11, turning on a vision sensor, an ultrasonic anti-collision sensor and a laser sensor for detecting position information and distance information about the area to be loaded and unloaded relative to the conveying belt (4) and image information about the area to be loaded and unloaded and the conveying belt (4), and outputting the image information, the position information and the distance information to the control system;
S12, controlling by the control system a loading and unloading end of the conveying belt (4) to penetrate into the area to be loaded and unloaded according to the image information, the distance information and the position information;
S13, acquiring by the control system size information about the containers on the conveying belt (4) according to the image information;
S14, adjusting by the control system the penetration degree of the loading and unloading end of the conveying belt (4) to the loading and unloading area according to the size information about the containers so as to reserve a container placement space;
S15, starting to move the conveying belt (4), and cooperating the rotating arm mechanism (1) and the suction cup mechanism (2) with each other to place the container on the conveying belt (4) in the area to be loaded and unloaded; and
S16, driving the suction cup mechanism (2) by the rotating arm mechanism (1) to try and push the container;
the unloading method comprises the steps of:
S21, turning on a vision sensor, an ultrasonic anti-collision sensor and a laser sensor for detecting position information and distance information about the area to be loaded and unloaded relative to the conveying belt (4) and image information about the area to be loaded and unloaded and the conveying belt (4), and outputting the image information, the position information and the distance information to the control system;
S22, controlling by the control system the loading and unloading end of the conveying belt (4) to be close to the area to be loaded and unloaded according to the image information, the position information and the distance information;
S23, adjusting by the control system the height of the loading and unloading end of the conveying belt (4) according to the image information; and
S24, cooperating the rotating arm mechanism (1) and the suction cup mechanism (2) with each other to suck and pull the container to the loading and unloading end of the conveying belt (4).
